# EUROPEAN PATENT APPLICATION

(11) **EP 2 802 107 A1**
(43) Date of publication of application: **12.11.2014**
(21) Application number: 13305597.0
(22) Date of filing: 07.05.2013
(51) Int. Cl.: H04L 12/54

(54) **Equipment-protected hardware device for in-service firmware upgrade of transmission systems**

(71) Applicant: ALCATEL LUCENT, 92100 Boulogne-Billancourt (FR)
(72) Inventor: Rauch, Peter, 70435 Stuttgart (DE)
(74) Representative: 2SPL Patentanwälte PartG mbB

(57) **Abstract**

A hardware device (1) configured for transferring data in a telecommunication system, comprising at least one input interface (2, 3, 4), at least two programmable logic devices (6, 7, 8, 9), and at least one crossbar switch (15, 16) configured to establish data communication paths in at least one operational state between the at least one input interface (2, 3, 4) and any one of the at least two programmable logic devices (6, 7, 8, 9), wherein the at least one crossbar switch (15,16) is configured to provide a temporary data communication path (12) for rerouting a data transfer between the at least one input interface (2, 3, 4) and a programmable logic device (6) that is selected for a firmware update, such that the data is transferred between the at least one input interface (2, 3, 4) and an idle programmable logic device (6, 7, 8, 9), and the hardware device (1) further including a portion of a firmware data communication path (13) to the programmable logic device (6) that is selected for the firmware update; and
a method for in-service firmware upgrading of a hardware device (1) of a telecommunication system.

## Description

The invention relates to an equipment-protected hardware device and a method for in-service upgrading of firmware in transmission systems.

### BACKGROUND ART

Hardware devices in transmission paths of telecommunication systems frequently comprise programmable logic devices which are controlled by firmware, a combination of a memory unit and a program code and additional data residing in it. While the programmable logic devices provide functional flexibility and are able to meet requirements of real-time operation with regard to speed of data transfer in an operational mode, updating the program code of the firmware requires data to be transferred to the programmable logic devices, which often causes intolerable traffic downtimes and/or losses of data transmission performance, due to firmware reload and configuration reestablishment.

### DESCRIPTION

It may be an object of the present invention to provide a hardware device comprising programmable logic devices for transferring data in a telecommunication system and an appropriate method, to enable an improved in-service firmware upgrade.

The object defined above is solved by providing a hardware device configured for transferring data in a telecommunication system, and a method for in-service firmware upgrading of a hardware device of a telecommunication system.

According to an exemplary aspect of the invention, a hardware device configured for transferring data in a telecommunication system is provided. The hardware device comprises at least one input interface and at least two programmable logic devices. Each one of the at least two programmable logic devices is configured to establish a portion of a data communication path for the at least one input interface.

At least one crossbar switch has at least two input lines and at least two output lines. The at least one input interface is connectable to one of the at least two input lines and each one of the at least two programmable logic devices is connectable to a separate one of the at least two output lines, such that the at least one crossbar switch is configured to establish data communication paths in at least one operational state between the at least one input interface and any one of the at least two programmable logic devices.

The at least one crossbar switch is configured to provide a temporary data communication path for rerouting a data transfer between the at least one input interface and a programmable logic device of the at least two programmable logic devices that is selected for a firmware update, such that the data is transferred between the at least one input interface and an idle one of the at least two programmable logic devices. The hardware device further includes a portion of a firmware data communication path to the programmable logic device of the at least two programmable logic devices that is selected for the firmware update.

The phrase "firmware update", as used in this application, shall be understood particularly as a replacement of a firmware-specific program code residing in a memory region of the programmable logic device by a later version of the program code by an overwriting process.

The phrase "data communication path", as used in this application, shall particularly encompass lines formed by wires as well as lines formed by optical fibers. In particular, a data communication path may comprise means for converting optical data into electrical data and/or vice versa.

The phrase "crossbar switch", as used in this application, shall be understood particularly as an assembly of individual switches between multiple inputs and multiple outputs, wherein the switches are arranged in a matrix. If the crossbar switch has K inputs and L outputs, then a crossbar switch has a matrix with K x L cross-points. A switch is located at each cross-point. If a switch is closed it connects one of K inputs to one of L outputs. The crossbar switch may be configured to provide a bridge function for distributing an input signal to more than one outputs by the option of closing more than one switch along an input line, and may also be configured to provide a select function for selecting one output by the option of closing more than one switch along an output line.

By the disclosed hardware device, losses of data transmission performance due to firmware upgrades in an operational state can at least substantially be reduced or made unnoticeable to a user. Because the utilized crossbar switch hardware logic is cheaper than a full device logic, another advantage of the solution lies in its economy.

Preferably, at least one of the at least two programmable logic devices is selected from a group formed by a field-programmable gate array (FPGA), a network processor, a generic array logic device (GAL), and a complex programmable logic device (CPLD). By that, hardware devices with new and flexible hardware functions and data transfer rates sufficient for modern telecommunication can be provided, whose operational performances would at least be only mildly compromised if a firmware upgrade was required.

In another preferred embodiment, the hardware device further comprises at least one programmable logic device that is intended to be a redundant device during a normal operation of the hardware device, and is configured to serve as the idle one of the at least two programmable logic devices.

The term "redundant device", as used in this application, shall be understood particularly as a device that is not utilized during the normal operation of the hardware device for establishing a portion of the data communication path for the at least one input interface.

Due to its redundancy, this programmable logic device can, in combination with the crossbar switch, provide a 1:N protection, wherein N denotes the number of programmable logic devices actively used for transferring data to the normal operation of the hardware device.

In another aspect of the present invention, the object is achieved by providing a method for in-service firmware upgrading of a hardware device of a telecommunication system, wherein the hardware device comprises at least one input interface and at least two programmable logic devices.

Each one of the at least two programmable logic devices is configured to establish a portion of a data communication path for the at least one input interface.

The hardware device further comprises at least one crossbar switch having at least two input lines and at least two output lines. The at least one input interface is connected to one of the at least two input lines and each one of the at least two programmable logic devices is connected to a separate one of the at least two output lines.

An active data transfer is established on a first data communication path between the at least one input interface and a programmable logic device of the at least two programmable logic devices that is selected for a firmware update.

The method comprises following steps:
- by control of the crossbar switch, provide a temporary data communication path between the at least one input interface and an idle one of the at least two programmable logic devices;
- by control of the crossbar switch, disconnect the first data communication path;
- transfer a firmware program code to a memory region of the programmable logic device of the at least two programmable logic devices that is selected for the firmware update via a firmware data communication path;
- by control of the crossbar switch, re-establish the first data communication path; and
- after re-establishing the first data communication path, disconnect the temporary data communication path by control of the crossbar switch.

Using the method, firmware upgrades in an operational state of the hardware device can be carried out with substantially reduced losses of data transmission performance or losses that are unnoticeable to a user. Another advantage of the method lies in its economy.

In a further preferred embodiment, the programmable logic devices are selected from a group formed by a field-programmable gate array, a network processor, a generic array logic device, and a complex programmable logic device. This provides the option of the method becoming widely applicable for hardware devices used in telecommunication systems.

In yet another preferred embodiment, the idle one of the at least two programmable logic devices is intended to be a redundant device during a normal operation of the hardware device. Due to its redundancy, this programmable logic device is always available for carrying out the method. Moreover, the redundant programmable logic device can, in combination with the crossbar switch, provide a 1:N protection for other programmable logic devices, wherein N denotes the number of programmable logic devices actively used for transferring data to the normal operation of the hardware device.

These and other aspects of the invention will be apparent from and elucidated with reference to the embodiments described hereinafter.

### BRIEF DESCRIPTION OF THE DRAWINGS

In the drawings:
Fig. 1 shows a schematic arrangement for upgrading a firmware program code of a programmable logic device designed as a field-programmable gate array;
Fig. 2 schematically illustrates a portion of a telecommunication system comprising two hardware devices in accordance with the invention; and
Fig. 3 a schematic view of connections in one of the crossbar switches of one of the hardware devices pursuant to Fig. 2.

### DETAILED DESCRIPTION

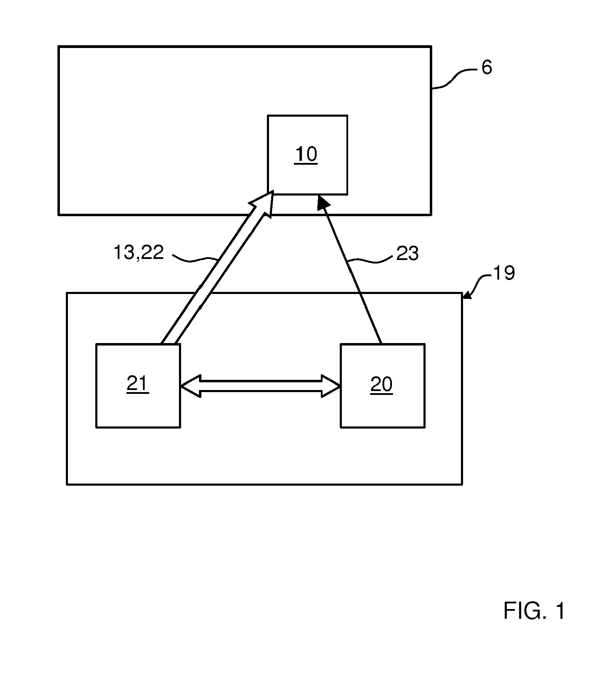

Fig. 1 shows a schematic view of a programmable logic device 6 designed as a field-programmable gate array. The field-programmable gate array comprises a memory region 10 that is configured to contain a firmware program code. For cost reasons, the memory region 10 commonly does not include enough swap space to take up two different versions of firmware program code. An upgrade to a new firmware by an upload 22 of a corresponding program code via a firmware data communication path 13 can be carried out in the manner known to the one skilled in the art, employing a processor unit 20 and a RAM unit 21 that the processor unit 20 has access to, both of which may for instance be residing in a computing unit 19. The uploading process via the RAM unit 21 is started by a trigger 23 provided by the processor unit 20. The field-programmable gate array is unable to transfer telecommunication data during the firmware upload which in a conventional hardware device results in downtime of the hardware device the field-programmable gate array might be part of.

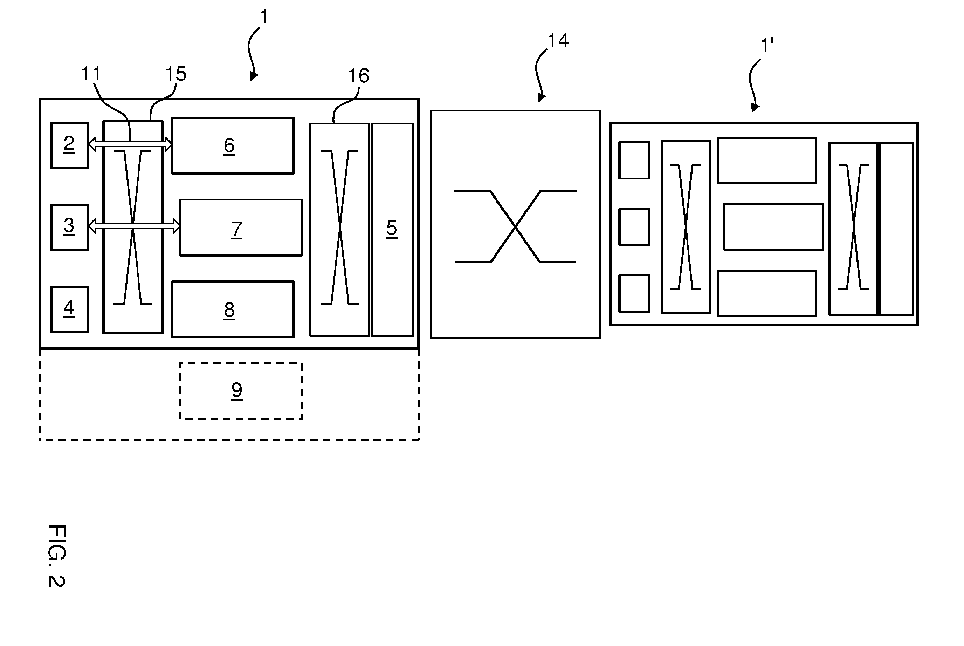

Fig. 2 schematically illustrates a portion of a telecommunication system comprising two hardware devices 1, 1□ in accordance with the invention which are connected by a switched fabric 14 as is known in the art. The hardware devices 1, 1□ are configured for transferring data within the telecommunication system. For clarity reasons, connecting lines for operation of the hardware device are omitted in Fig. 2. Telecommunication data are transferred from the left to the right in the view of Fig. 2, but could in general be transferred in both directions. The hardware device 1 in the left part of Fig. 2 is shown in greater detail than the hardware device 1□ in the right part of Fig. 2, and for clarity reasons the further description refers to the left hardware device 1 only, although both hardware devices 1, 1□ are designed identically.

The hardware device 1 comprises three input interfaces 2, 3, 4 and one output interface 5. The input interfaces 2, 3, 4 are designed as XFP (10 Gigabit small form-factor pluggable) transceivers with a multimode fiber optics. The output interface 5 is designed as a backplane interface. XFP transceivers and backplane interfaces are well known to the one skilled in the art and shall therefore not be described in further detail herein. Further, the hardware device 1 includes three programmable logic devices 6, 7, 8 which are designed as field-programmable gate arrays (FPGAs). In principle, the programmable logic devices 6, 7, 8 could be selected from a group formed by a field-programmable gate array, a network processor, a generic array logic device, and complex programmable logic device. Each one of the three programmable logic devices 6, 7, 8 is configured to establish a portion of a data communication path for at least one of the three input interfaces 2, 3, 4 and the output interface 5.

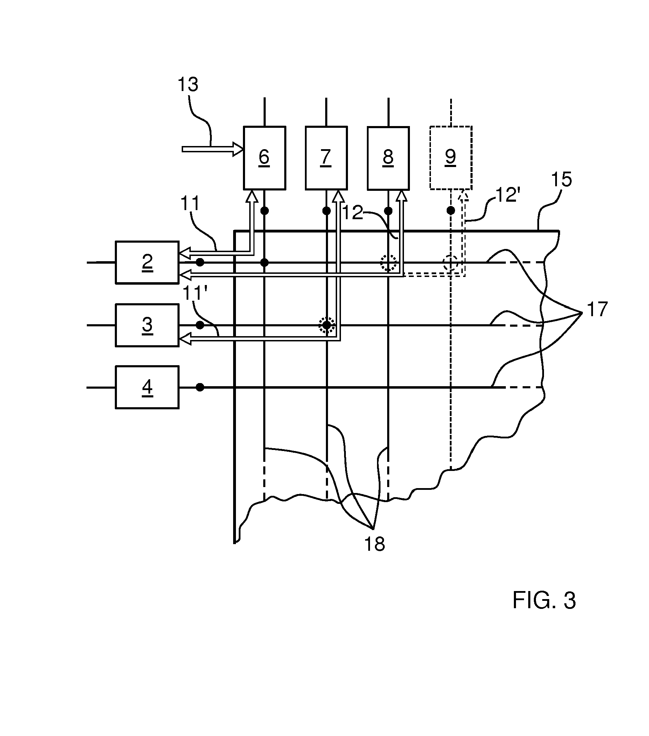

Also, the hardware device 1 comprises two crossbar switches 15, 16. Each one of the two crossbar switches 15, 16 has at least three input lines 17 and at least three output lines 18 (only three each shown in Fig. 3 for clarity). Each one of the three input interfaces 2, 3, 4 is connected to a separate one of the at least three input lines 17. Each one of the programmable logic devices 6, 7, 8 is connected to a separate one of the at least three output lines 18. By that, the first crossbar switch 15 is configured to establish data communication paths in an operational state of the hardware device 1 between any one of the three input interfaces 2, 3, 4 and any one of the three programmable logic devices 6, 7, 8.

A schematic view of the connections in the first crossbar switch 15 in the operational state of the hardware device 1 is given in Fig. 3. The connections between the input interfaces 2, 3, 4 and the programmable logic devices 6, 7, 8 are indicated by full dots within the crossbar switch 15.

In the following, a method for in-service firmware upgrading of the programmable logic devices 6, 7, 8 of the hardware device 1 is described.

In preparation of the in-service firmware upgrading of one of the programmable logic devices 6, 7, 8 it shall be understood that the hardware devices 1, 1□ and the switched fabric 14 are configured as shown in Fig. 2, that the hardware devices 1, 1□ are in a normal state of operation, that an active data transfer is established on a first data communication path 11 between a first input interface 2 and programmable logic device 6 selected for a firmware update, that another data transfer is established on a second data communication path 11□ between the second input interface 3 and the second programmable logic device 7, and that there is no data transfer via the third programmable logic device 8, so that the third programmable logic device 8 is idling in a standby state of operation. Also, the third input interface 4 is in an idle condition and in a standby mode, ready for a potentially upcoming data transfer.

In a first step, by control of the crossbar switch 15, a temporary data communication path 12 between the first input interface 2 and the idle programmable logic device 8 is provided (Fig 3). Then, in a next step, by control of the crossbar switch 15, the first data communication path 11 is disconnected.

Next, the firmware program code is transferred to the memory region 10 of the programmable logic device 6 selected for the firmware update via the firmware data communication path 13, a portion of which is included in the hardware device 1.

The connections established by software control of the crossbar switch 15 between the input interfaces 2, 3, 4 and the programmable logic devices 6, 7, 8 during the in-service firmware upgrading are indicated in Fig. 3 by open dotted circles.

After completion of the transfer of the firmware program code, by software control of the crossbar switch 15, the first data communication path 11 is re-established by connections as indicated by the full dots in Fig. 3. In a final step, the temporary data communication path 12 is disconnected by control of the crossbar switch 15.

In this way, an update of the firmware program code of the programmable logic devices 6, 7, 8 of the hardware devices 1, 1□ can be carried out one by one without affecting the data transfer rate of the telecommunication system.

In an alternative embodiment, the hardware device 1 comprises a fourth programmable logic device 9 indicated by dashed lines in Figs. 2 and 3 that is intended to be redundant during normal operation of the hardware device 1. In the exemplary embodiment described above, the fourth programmable logic device 9 is configured to take over the function of the idle programmable logic device 8 and, in combination with the first input interface 2, to provide an alternative temporary data communication path 12□.

While the invention has been illustrated and described in detail in the drawings and foregoing description, such illustration and description are to be considered illustrative or exemplary and not restrictive; the invention is not limited to the disclosed embodiments.

Other variations to be disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### REFERENCE SYMBOL LIST

| | |
|---|---|
| 1 | hardware device |
| 2 | first input interface |
| 3 | second input interface |
| 4 | third input interface |
| 5 | output interface |
| 6 | programmable logic device |
| 7 | programmable logic device |
| 8 | fourth programmable logic device |
| 9 | programmable logic device |
| 10 | memory region |
| 11 | first data communication path |
| 12 | temporary data communication path |
| 13 | firmware data communication path |
| 14 | switched fabric |
| 15 | crossbar switch |
| 16 | crossbar switch |
| 17 | input line |
| 18 | output line |
| 19 | computing unit |
| 20 | processor unit |
| 21 | RAM unit |
| 22 | upload |
| 23 | trigger |

## Claims

1. A hardware device (1) configured for transferring data in a telecommunication system, comprising:
at least one input interface (2, 3, 4);
at least two programmable logic devices (6, 7, 8, 9), wherein each one of the at least two programmable logic devices (6, 7, 8, 9) is configured to establish a portion of a data communication path for the at least one input interface (2, 3, 4);
at least one crossbar switch (15, 16) having at least two input lines (17) and at least two output lines (18), wherein the at least one input interface (2, 3, 4) is connectable to one of the at least two input lines (17) and each one of the at least two programmable logic devices (6, 7, 8, 9) is connectable to a separate one of the at least two output lines (18), such that the at least one crossbar switch (15, 16) is configured to establish data communication paths in at least one operational state between the at least one input interface (2, 3, 4) and any one of the at least two programmable logic devices (6, 7, 8, 9);
wherein the at least one crossbar switch (15, 16) is configured to provide a temporary data communication path (12) for rerouting a data transfer between the at least one input interface (2, 3, 4) and a programmable logic device (6) of the at least two programmable logic devices (6, 7, 8, 9) that is selected for a firmware update, such that the data is transferred between the at least one input interface (2, 3, 4) and an idle one (8) of the at least two programmable logic devices (6, 7, 8, 9); and
a portion of a firmware data communication path (13) to the programmable logic device (6) of the at least two programmable logic devices (6, 7, 8, 9) that is selected for the firmware update.

2. The hardware device (1) as claimed in claim 1, wherein at least one of the at least two programmable logic devices (6, 7, 8, 9) is selected from a group formed by a field-programmable gate array, a network processor, a generic array logic device, and a complex programmable logic device.

3. The hardware device (1) as claimed in claim 1 or 2, further comprising at least one programmable logic device (9) intended to be a redundant device during a normal operation of the hardware device (1), and configured to serve as the idle one of the at least two programmable logic devices (6, 7, 8, 9).

4. A method for in-service firmware upgrading of a hardware device (1) of a telecommunication system, wherein the hardware device (1) comprises
at least one input interface (2, 3, 4);
at least two programmable logic devices (6, 7, 8, 9), wherein each one of the at least two programmable logic devices (6, 7, 8, 9) is configured to establish a portion of a data communication path for the at least one input interface (2, 3, 4);
at least one crossbar switch (15, 6) having at least two input lines (17) and at least two output lines (18); wherein the at least one input interface (2, 3, 4) is connected to one of the at least two input lines (17) and each one of the at least two programmable logic devices (6, 7, 8, 9) is connected to a separate one of the at least two output lines (18),
wherein an active data transfer is established on a first data communication path (11) between the at least one input interface (2, 3, 4) and a programmable logic device (6) of the at least two programmable logic devices (6, 7, 8, 9) that is selected for a firmware update,
the method comprising following steps:
- by control of the crossbar switch (15), provide a temporary data communication path (12) between the at least one input interface (2) and an idle one (8) of the at least two programmable logic devices (6, 7, 8, 9);
- by control of the crossbar switch (15), disconnect the first data communication path (11);
- transfer a firmware program code to a memory region (10) of the programmable logic device (6) of the at least two programmable logic devices (6, 7, 8, 9) that is selected for the firmware update via a firmware data communication path (13);
- by control of the crossbar switch (15), re-establish the first data communication path (11); and
- after re-establishing the first data communication path (11), disconnect the temporary data communication path (12) by control of the crossbar switch (15).

5. The method as claimed in claim 4, wherein at least one of the programmable logic devices (6, 7, 8, 9) is selected from a group formed by a field-programmable gate array, a network processor, a generic array logic device, and a complex programmable logic device.

6. The method as claimed in any one of claims 4 or 5, wherein the idle one of the at least two programmable logic devices (6, 7, 8, 9) is intended to be a redundant device during a normal operation of the hardware device (1).

## Amended claims

### Amended claims in accordance with Rule 137(2) EPC.

**1.** A hardware device (1) configured for transferring data in a telecommunication system, comprising:
at least one input interface (2, 3, 4);
at least two programmable logic devices (6, 7, 8, 9), wherein each one of the at least two programmable logic devices (6, 7, 8, 9) is configured to establish a portion of a data communication path for the at least one input interface (2, 3, 4);
at least one crossbar switch (15, 16) having at least two input lines (17) and at least two output lines (18), wherein the at least one input interface (2, 3, 4) is connectable to one of the at least two input lines (17) and each one of the at least two programmable logic devices (6, 7, 8, 9) is connectable to a separate one of the at least two output lines (18), such that the at least one crossbar switch (15, 16) is configured to establish data communication paths in at least one operational state between the at least one input interface (2, 3, 4) and any one of the at least two programmable logic devices (6, 7, 8, 9);
**characterized in that**
the at least one crossbar switch (15, 16) is configured to
provide a temporary data communication path (12) between the at least one input interface (2, 3, 4) and an idle one (8) of the at least two programmable logic devices (6, 7, 8, 9) ;
disconnect an active data transfer on a first data communication path (11) between the at least one input interface (2, 3, 4) and a programmable logic device (6) of the at least two programmable logic devices (6, 7, 8, 9) that is selected for a firmware update;
transfer a firmware program code to a memory region (10) of the programmable logic device (6) of the at least two programmable logic devices (6, 7, 8, 9) that is selected for the firmware update via a firmware data communication path (13);
re-establish the first data communication path (11); and
after re-establishing the first data communication path (11), disconnect the temporary data communication path (12).

**2.** The hardware device (1) as claimed in claim 1, wherein at least one of the at least two programmable logic devices (6, 7, 8, 9) is selected from a group formed by a field-programmable gate array, a network processor, a generic array logic device, and a complex programmable logic device.

**3.** The hardware device (1) as claimed in claim 1 or 2, further comprising at least one programmable logic device (9) intended to be a redundant device during a normal operation of the hardware device (1), and configured to serve as the idle one of the at least two programmable logic devices (6, 7, 8, 9).

**4.** A method for in-service firmware upgrading of a hardware device (1) of a telecommunication system, wherein the hardware device (1) comprises
at least one input interface (2, 3, 4);
at least two programmable logic devices (6, 7, 8, 9), wherein each one of the at least two programmable logic devices (6, 7, 8, 9) is configured to establish a portion of a data communication path for the at least one input interface (2, 3, 4);
at least one crossbar switch (15, 6) having at least two input lines (17) and at least two output lines (18); wherein the at least one input interface (2, 3, 4) is connected to one of the at least two input lines (17) and each one of the at least two programmable logic devices (6, 7, 8, 9) is connected to a separate one of the at least two output lines (18),
wherein an active data transfer is established on a first data communication path (11) between the at least one input interface (2, 3, 4) and a programmable logic device (6) of the at least two programmable logic devices (6, 7, 8, 9) that is selected for a firmware update,
the method
**characterized in that**
it comprises following steps:
- by control of the crossbar switch (15), provide a temporary data communication path (12) between the at least one input interface (2) and an idle one (8) of the at least two programmable logic devices (6, 7, 8, 9);
- by control of the crossbar switch (15), disconnect the first data communication path (11);
- transfer a firmware program code to a memory region (10) of the programmable logic device (6) of the at least two programmable logic devices (6, 7, 8, 9) that is selected for the firmware update via a firmware data communication path (13);
- by control of the crossbar switch (15), re-establish the first data communication path (11); and
- after re-establishing the first data communication path (11), disconnect the temporary data communication path (12) by control of the crossbar switch (15).

**5.** The method as claimed in claim 4, wherein at least one of the programmable logic devices (6, 7, 8, 9) is selected from a group formed by a field-programmable gate array, a network processor, a generic array logic device, and a complex programmable logic device.

**6.** The method as claimed in any one of claims 4 or 5, wherein the idle one of the at least two programmable logic devices (6, 7, 8, 9) is intended to be a redundant device during a normal operation of the hardware device (1).
